# DEMANDE DE BREVET EUROPEEN

(11) **EP 3 508 994 A1**
(43) Date de publication de la demande: **10.07.2019**
(21) Numéro de dépôt: 19150779.7
(22) Date de dépôt: 08.01.2019
(51) Int. Cl.: G06F 17/40, G06Q 50/04, B23Q 17/00

(54) **DISPOSITIF D'ACQUISITION D'INFORMATIONS D'AU MOINS UN OUTIL DE TRAVAIL D'UN MATERIAU EN FEUILLE MONTÉ SUR UNE MACHINE DE PRESSAGE, PROCÉDÉ DE TRAITEMENT DESDITES INFORMATIONS**

(30) Priorité: 08.01.2018 FR 1800017
(71) Demandeur: Capteole, 87220 Eyjeaux (FR)
(72) Inventeur: GIL, Patrick, 87100 LIMOGES (FR); SAMBLAT GIL, Laëtitia, 87100 LIMOGES (FR)
(74) Mandataire: Aquinov

(57) **Abrégé**

L'objet de l'invention est un dispositif d'acquisition d'informations concernant un outil de travail (16) de produits bruts PB, en feuille, comprenant un support (16-1) prévu pour être monté sur une machine de pressage (14) comprenant une partie d'acquisition d'informations (10) embarquée avec ledit outil de travail (16) et une partie d'acquisition d'informations (100) non embarquée.

## Description

La présente invention concerne un dispositif d'acquisition d'informations et de suivi d'au moins un outil de travail d'un matériau en feuille, monté sur une machine de pressage et couvre aussi le procédé de traitement de ces informations.

Dans le domaine du traitement des matériaux en feuilles ou en plaques, une plaque pour la suite de la description étant assimilée à une feuille et donc couverte, il existe des outils permettant de réaliser les différentes opérations nécessaires sur ladite feuille pour obtenir le travail au sens large, comprenant la découpe et/ou l'emboutissage et/ou le rainage et/ou l'estampage et/ou l'éjection et/ou la séparation éventuelle des différentes parties.

De même, les feuilles peuvent être issues d'un rouleau et découpées préalablement ou la feuille est utilisée à plat, en continu.

Les feuilles sont généralement de faible épaisseur.

Pour la suite de la description, il sera uniquement visé la découpe mécanique, à titre d'exemple, sans que cela soit limitatif, les autres opérations relevant des mêmes types de contraintes.

Ainsi, pour la découpe mécanique, un outil de découpe portant des lames, au profil de la pièce à obtenir, est monté sur un support mobile d'une machine de pressage, qui présente ledit outil en regard d'une feuille de matériau mince. Ladite machine de pressage exerce une force sur l'outil de découpe et donc sur la lame de façon à faire pénétrer ladite lame dans la feuille de matériau de faible épaisseur et à obtenir la découpe.

Le support peut être monté sur une machine de pressage avec un plateau dite presse plane, à translation ou à pivotement, ou encore un tambour sur une presse rotative. La machine de pressage peut être du type automatique, manuelle ou semi-automatique, la présente invention trouvant application à tous ces types de machines.

Dans la chaîne de l'industrie de la découpe, prise en exemple illustratif non limitatif, il existe de nombreux intervenants entre le besoin exprimé par le client et le produit fini, découpé, prêt à être mis en forme 3D ou directement utilisé.

Tout d'abord le conducteur de la machine de pressage cherche à améliorer sa conduite de machine, à contrôler ses outils, à mémoriser les paramètres de calage pour chacun de ces outils, à assurer une traçabilité et à déclencher la maintenance des outillages pour l'essentiel. Or, ces opérations relèvent de la qualité et du savoir-faire dudit conducteur de machine qui acquiert les informations au fur et à mesure de son expérience, qui enregistre et consigne certaines informations, généralement de façon aléatoire et cette consignation prend du temps au détriment de la performance. Le reste est mémorisé mais la mémorisation est sujette à des variations au fil du temps, comme toujours.

Il est donc difficile de tout consigner par écrit, même de façon numérique.

De plus, la transmission des informations est rendue plus difficile avec les opérateurs qui se remplacent ou qui se succèdent, déjà quand elle est possible, et cela devient très délicat avec d'autres services connexes aux postes de découpe mais souvent distants, comme les services de maintenance, les services Recherche et Développement, le service des achats, pour ne citer que ceux-là.

En plus des difficultés de transmission, le problème vient aussi du fait que les informations sont constatées en différé, c'est-à-dire après détection d'un problème et non en prévention ou à partir de signes annonciateurs dudit problème.

Par exemple, l'usure d'un outil est soit estimée et l'outil est changé préventivement alors qu'il aurait pu être fonctionnel plus longtemps, soit le conducteur de machine constate la détérioration de la qualité de découpe des produits sortant et décide du changement de l'outil de découpe mais au moins une partie d'un lot a été découpée avec une qualité moindre, sans compter la surveillance quasi continue exercée par le conducteur.

Ceci n'est pas satisfaisant.

En outre, ceci engendre des conséquences non directement et immédiatement visibles mais qui existent néanmoins. C'est ainsi que si l'outil travaille mal, cela a des répercussions sur la machine de découpe elle-même qui peut être soumise à des vibrations anormales, excessives, ou à des impacts différentiels, qui provoquent des usures de certains composants de façon prématurée et qui peuvent générer des pannes.

Le service de préparation des outils, dans une organisation de découpe, est à la disposition du conducteur de la machine de découpe pour lui fournir les outils nécessaires à la réalisation d'une commande. Aussi, pour ne pas être surpris par une usure prématurée, par un incident non prévisible, ce service dispose de stocks plus importants que ceux qui seraient purement nécessaires.

L'anticipation est difficile car ce service de préparation des outils ne dispose pas de données fiables. Les seules données sont constatées après le démontage d'un outil mais il est difficile de faire du prédictif du fait de l'absence de paramètres mesurés durant le fonctionnement de la machine de découpe avec son ou ses outils de découpe.

Le but est aussi de constater la qualité et la performance d'un outil mais, a posteriori, puisque les données ne sont mesurables qu'après démontage dudit outil. Toute analyse fine est également impossible car une fois l'outil démonté par exemple, on constate une usure anormale localisée mais il n'est pas possible de déterminer depuis quand la dégradation s'est produite : est-ce dans les dernières découpes avec une dégradation brutale ou est-ce depuis le début avec une dégradation lente ? La solution technique à apporter ne sera très certainement pas la même.

Ces informations ont des incidences beaucoup plus lointaines car elles peuvent guider le choix des machines à changer, à modifier et des investissements machines à réaliser, à identifier les performances du fournisseur d'outils de travail, à étudier les prix des produits finis en intégrant au plus juste les coûts des outils et de la machine de pressage qui les porte, le coût des temps d'arrêts, à étudier les cadences à respecter ou encore à faire évoluer des méthodologies de travail préalablement définies etc.

Il est rappelé que les outils sont souvent la propriété des clients du produit final, or actuellement les informations fournies sont très nombreuses mais encore incomplètes du fait que le client du produit final ne dispose pas, lui aussi, des données en temps réel et des variations au cours du temps. Le client final, propriétaire des outils ne peut que constater, lui aussi a posteriori, sans pouvoir anticiper comme il souhaiterait le faire.

D'autre part, les données relatives aux outils de découpe sont associées, regroupées et mémorisées par tout moyen de saisie mais encore faut-il relier ces informations à chacun des outils, à chaque période de travail, aux conditions d'exploitation de l'outil, aux cadences, ou encore aux réglages.

L'idéal serait de pouvoir monter un outil en le calant de façon quasi automatique sachant qu'il porte toutes ces informations et qu'il peut communiquer avec la machine de pressage et que le conducteur peut y avoir accès. En plus du conducteur, toutes les autres personnes susceptibles d'être intéressées soit par l'opération en cours soit par le produit final, devraient aussi avoir accès à ces informations.

De même, au cours de la production, le conducteur peut suivre en temps réel, ou avec éventuellement un très faible delta temporel lié au traitement des signaux, le comportement de l'outil et donc intervenir au plus juste, mais sur la base d'une batterie d'indicateurs tangibles et objectifs, ce qui n'interdit pas de confirmer visuellement la qualité du produit obtenu.

Le but serait aussi de pouvoir assurer une communication avec tous les intervenants qui disposeraient de toutes les données sur les outils, sur les performances, de façon à effectuer un suivi précis, à pouvoir anticiper la fabrication de nouveaux outillages ou des modifications, les opérations de lamage et de remise en état de façon générale.

Du fait des données précises durant les opérations de production, il est possible aussi aux services Recherche & Développement de progresser et de trouver des solutions palliatives aux problèmes posés.

Enfin, la reproductibilité de la qualité des produits pourrait être améliorée du fait d'une acquisition des informations liées à la fabrication tout au long de cette fabrication.

La présente invention vise à répondre à ces besoins et à pallier les inconvénients des outils de travail de matériaux en feuille de l'art antérieur en proposant un dispositif d'acquisition d'informations pour au moins un outil de travail, en temps réel, ledit dispositif étant en partie intégré audit au moins un outil de travail.

A cet effet, le dispositif comprend des moyens embarqués comportant au moins un capteur d'un paramètre lié audit outil de travail, au moins un moyen d'acquisition des données dudit au moins un capteur ainsi que des moyens d'émission afin de pouvoir transférer lesdites données acquises du au moins un capteur.

Ledit dispositif comprend, de plus, des moyens non embarqués, notamment des moyens de réception des données acquises, de préférence disposés à proximité de la machine de découpe équipée dudit outil de découpe muni du au moins un capteur, lesdits moyens de réception étant destinés à communiquer avec les moyens d'émission embarqués.

Le dispositif est maintenant décrit en détail suivant un mode de réalisation particulier, non limitatif, cette description s'appuyant sur les dessins annexés, dessins sur lesquels les différentes figures montrent schématiquement le dispositif selon l'invention mais aussi les résultats obtenus.

Les figures représentent ainsi :
- Figure 1 : une vue schématique du dispositif dans son ensemble,
- Figure 2 : une vue schématique détaillée de la partie embarquée,
- Figure 3 : une vue des résultats d'informations ainsi obtenus,
- Figure 4 : une vue d'une courbe montrant l'effort de découpe d'un produit brut comparé à l'effort sans feuille,
- Figure 5 : une vue d'une courbe de différentes natures de produits, en l'occurrence différents papiers.

Le dispositif d'acquisition d'informations selon la présente information comprend des moyens embarqués d'acquisition d'informations 10 et des moyens non embarqués d'acquisition d'informations 100.

L'exemple qui suit, à titre illustratif de la présente invention concerne une ligne de découpe d'un matériau en feuille.

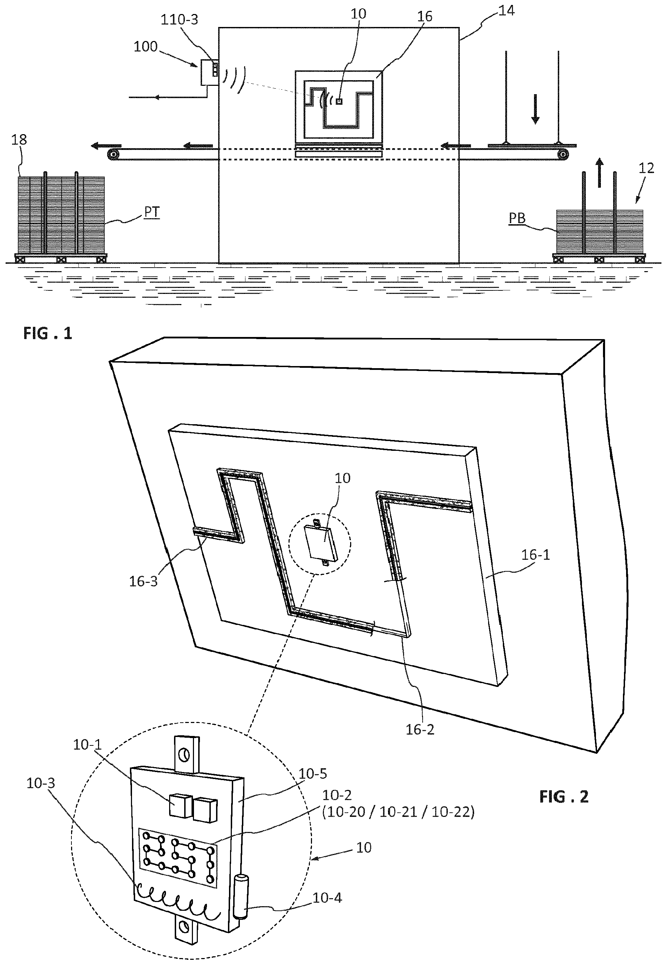

On a représenté sur la figure 1, une vue schématique d'une ligne de découpe simplifiée, comprenant un poste d'alimentation 12, une machine de découpe 14 portant au moins un outil de découpe 16 et un poste de sortie 18.

Le poste d'alimentation 12 consiste à partir de produits bruts plats PB, généralement empilés, à distribuer les produits bruts plats PB, un à un, vers le poste de découpe.

Bien entendu, le poste d'alimentation pourrait ne pas avoir d'existence si la ligne de découpe fait suite à une unité d'impression par exemple et se trouve directement alimentée.

Chaque produit brut PB est convoyé pour être disposé sous l'outil de découpe 16 de la machine de découpe 14. On considère une machine de découpe du type presse plane, par exemple portefeuille pour ne citer que celle-ci.

Le plateau support de l'outil est donc déplacé et pressé contre le produit brut PB qui se trouve découpé par l'outil de découpe 16 ou l'inverse suivant l'agencement de la machine de pressage.

Un outil de coupe 16 comprend en effet de façon connue, un support 16-1 avec une lame de découpe 16-2 à la forme de la découpe à réaliser.

Cette lame de découpe 16-2 présente des caractéristiques particulières en fonction de la nature du matériau à découper et de la forme de la découpe, notamment.

Le profil tranchant de la lame de découpe 16-2 est particulièrement étudié pour permettre une découpe mais aussi la libération du produit travaillé PT.

La partie interne à la découpe et la partie externe à ladite découpe doivent pouvoir être séparées.

Des compléments sous forme de bandes de matériau résilient 16-3, déposées à proximité immédiate de la lame, facilitent l'éjection et le dégagement de la lame de l'outil de découpe du produit brut PB après découpe pour donner le produit travaillé PT.

Le produit travaillé PT est ensuite convoyé par la machine de découpe 12 vers le poste de sortie 18 qui accueille le produit travaillé PT, ou, si la ligne en dispose, vers un poste d'éjection et de séparation. Sinon le produit travaillé PT est stocké, pour retirer ultérieurement la partie utile pour mettre directement en forme ladite partie utile, s'il s'agit d'un produit en 3 dimensions par exemple.

Comme montré sur la figure 2, la partie embarquée 10 du dispositif d'acquisition d'informations comprend au moins un capteur 10-1 de mesure d'un paramètre physique comme la force exercée sur l'outil de découpe, par exemple à l'aide d'un capteur piézoélectrique ou de jauges de contraintes, ou encore un capteur de température, un capteur d'hygrométrie, un capteur accéléromètre ou un capteur des mesures de vibrations mais aussi un capteur optique ou un capteurs à ultrasons.

La partie embarquée 10 comprend également des moyens d'acquisition des données 10-2 issues du au moins un capteur, sous forme d'un processeur 10-20 et d'une mémoire 10-21 avec un logiciel embarqué 10-22.

Cette même partie embarquée 10 inclut des moyens de communication 10-3, notamment d'émission, permettant le transfert des données acquises à partir du processeur qui a enregistré les données du au moins un capteur. Ces moyens de communication 10-3 permettent aussi le pilotage du processeur 10-20 et de son logiciel 10-22, modifications, corrections etc.

Des moyens d'alimentation en énergie électrique 10-4 sont aussi associés et embarqués pour fournir l'énergie électrique nécessaire aux différents composants embarqués, de façon autonome.

De façon avantageuse, la partie embarquée 10 est disposée dans un boîtier 10-5 solidarisé, de façon amovible et accessible, au support de lame 16-1 de l'outil de découpe.

La partie non embarquée 100, schématiquement représentée sur la figure 1, comprend des moyens de communication 110-3 prévus pour échanger avec les moyens de communication 10-3 embarqués, en continu ou en fonction d'un protocole d'échange particulier, notamment pour recevoir les données du au moins un capteur 10-1.

Cette partie non embarquée 100 peut être directement un poste du système informatique général d'une usine de travail de matériaux en feuille, ou un relai vers ledit système informatique.

Les informations collectées peuvent ensuite alimenter une base de données, selon des mises en forme différentes, en fonction des besoins, avec des accès différenciés selon que l'accès intéresse un client, un fabricant d'outils de découpe, un fabricant de machines de découpe portant les outils, une société de service de découpe.

Les moyens de communication peuvent être de type à radiofréquence. Ceci permet de disposer d'une communication exclusive et sélective entre la partie non embarquée et chaque partie embarquée. Une partie non embarquée peut ainsi communiquer avec plusieurs parties embarquées.

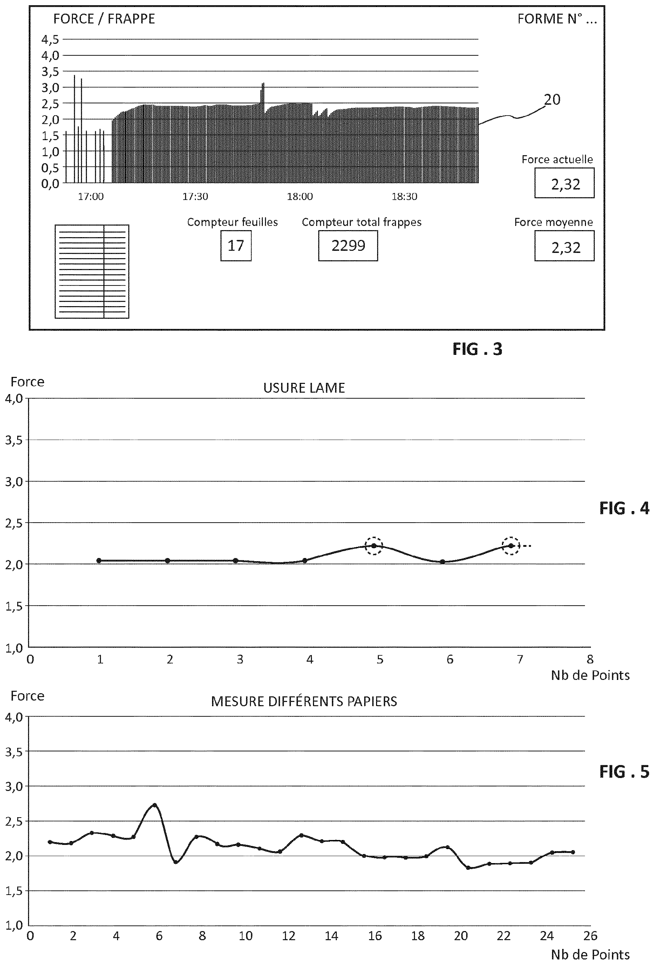

Sur la figure 3, on a représenté un diagramme 20 de présentation des informations recueillies dans le cas d'un exemple simple.

Sur ce diagramme, on constate la présence de la courbe des forces de frappe successives, par frappe, en fonction du temps. Ces valeurs sont les valeurs collectées et enregistrées par un capteur de force par exemple.

Le procédé de traitement consiste par exemple à moyenner la valeur des forces exercées et à indiquer la valeur de chaque frappe et la moyenne des forces si bien qu'il est possible de voir l'évolution au cours du temps et de distinguer une évolution non acceptable d'une évolution tout à fait ponctuelle. Ainsi sur cette figure 3, la valeur obtenue à 3,2 vers 18h48 peut être le signe d'une coupe de deux feuilles simultanément. A l'inverse un pic bas peut être signe d'une frappe à vide ou d'un défaut machine ou d'un défaut outillage.

Le compteur de frappes est associé à l'outil, automatiquement, si bien que, dès la reprise de l'outil dans le magasin et dès son remontage sur la machine de découpe, le compteur est incrémenté. Les dates sont aussi associées pour déterminer si l'outil a des performances qui varient en fonction de certains autres paramètres comme l'humidité, la température ou la qualité d'un même outil mais de différents fournisseurs ou avec des lames d'un même fournisseur mais ayant subies différents traitements thermiques par exemple.

Sur le graphique de la figure 4, on a montré l'augmentation de l'effort à exercer lorsqu'un produit brut PB est positionné sous la lame de l'outil de coupe.

Tous les efforts du capteur de mesure de l'effort, dans le cas considéré, sont des signaux électriques enregistrés, signaux qui sont traduits en équivalent d'une force exercée.

On constate que, pour un même produit, les mesures sont reproductibles car elles sont toutes dans une même plage étroite de valeurs.

Si l'effort exercé augmente comme sur les deux pics de la figure 4, le conducteur peut en déduire qu'il y a une usure de la lame de découpe proprement dite par exemple. La lame pénètre moins bien dans la matière, ce qui se traduit également par une moins bonne qualité de la découpe qui sera moins franche avec un bord plus écrasé du fait d'un appui sur un fil de coupe plus large.

La pénétration de la lame va conduire à une coupe de la surface moins nette.

Dans le cas de la figure 5, on note la différence d'efforts de coupe à exercer entre différents papiers, ceci indiquant bien que les mesures sont précises, obtenues en continu et directement, avec une forte sensibilité discriminante.

L'analyse des vibrations peut permettre de déterminer les défauts d'équilibrage, de géométrie par exemple mais aussi les états "en marche" ou "en arrêt" de la machine.

Ces problématiques se retrouvent de façon totalement similaires pour du rainage, de la séparation, du gaufrage ou autre travail de matériaux en feuille.

## Revendications

1. Dispositif d'acquisition d'informations concernant un outil de travail (16) de produits bruts PB, en feuille, comprenant un support (16-1) prévu pour être monté sur une machine de pressage (14) comprenant une partie d'acquisition d'informations (10) embarquée avec ledit outil de travail (16) et une partie d'acquisition d'informations (100) non embarquée.

2. Dispositif d'acquisition d'informations selon la revendication 1, **caractérisé en ce que** la partie embarquée de l'outil de travail (16) comprend au moins un capteur (10-1) de mesure d'un paramètre physique, des moyens d'acquisition des données (10-2) et des moyens de communication (10-3).

3. Dispositif d'acquisition d'informations selon la revendication 2, **caractérisé en ce que** le au moins un capteur (10-1) est choisi parmi les capteurs de force, de température, d'hygrométrie, accéléromètre, de mesure de vibrations.

4. Dispositif d'acquisition d'informations selon la revendication 2 ou 3, **caractérisé en ce que** les moyens d'acquisition des données (10-2) comprennent un processeur (10-20) et une mémoire (10-21) avec un logiciel embarqué (10-22).

5. Dispositif d'acquisition d'informations selon la revendication 2, 3 ou 4, **caractérisé en ce que** les moyens de communication (10-3) sont à radiofréquences.

6. Dispositif d'acquisition d'informations selon l'une quelconque des revendications précédentes, **caractérisé en ce que** la partie d'acquisition d'informations (10) embarquée est disposée dans un boîtier (10-5) solidarisé, de façon amovible et accessible, au support (16-1) de l'outil de travail (16).

7. Dispositif d'acquisition d'informations selon l'une quelconque des revendications précédentes, **caractérisé en ce que** la partie d'acquisition d'informations (10) embarquée comprend des moyens d'alimentation en énergie électrique (10-4).

8. Dispositif d'acquisition d'informations selon l'une quelconque des revendications précédentes, **caractérisé en ce que** la partie d'acquisition d'informations (100) non embarquée comprend des moyens de communication (110-3).

9. Dispositif d'acquisition d'informations selon les revendications 2, 5 et 8 **caractérisé en ce que** les moyens de communication (110-3) de la partie d'acquisition d'informations (100) non embarquée sont aptes à communiquer avec les moyens de communication (10-3) embarqués, en continu ou en fonction d'un protocole d'échange particulier.

10. Procédé de traitement des informations acquises par le dispositif selon l'une quelconque des revendications précédentes, **caractérisé en ce que** les informations acquises du au moins capteur (10-1) de la partie d'acquisition d'informations (10) embarqués sont transmises vers une banque de données par la partie d'acquisition d'informations (100) non embarquée.
